# EUROPÄISCHE PATENTSCHRIFT

(11) **EP 3 083 351 B1**
(45) Veröffentlichungstag und Bekanntmachung des Hinweises auf die Patenterteilung: **18.07.2018**
(21) Anmeldenummer: 14793021.8
(22) Anmeldetag: 03.11.2014
(51) Int. Cl.: B60T 8/88, B60T 17/18

(54) **KRAFTFAHRZEUG**
MOTOR VEHICLE
VÉHICULE À MOTEUR

(30) Priorität: 21.12.2013 DE 102013021871
(43) Veröffentlichungstag der Anmeldung: 26.10.2016
(73) Patentinhaber: Audi AG, 85045 Ingolstadt (DE)
(72) Erfinder: STEMMER, Martin, 85445 Niederding (DE); BROK, Tobias, 85092 Kösching (DE)
(74) Vertreter: Reichert, Thomas Klaus
(86) Internationale Anmeldenummer: PCT/EP2014/002942
(87) Internationale Veröffentlichungsnummer: WO 2015/090487

(56) Entgegenhaltungen:
- EP-A2- 0 937 620
- DE-A1-102008 024 661
- DE-A1-102011 122 776

## Beschreibung

Die Erfindung betrifft ein Kraftfahrzeug umfassend mehrere Räder sowie ein Bremssystem mit jeweils einem Rad zugeordneten, hydraulisch betätigbaren Bremsen, wenigstens einen Bremskreis, über den die Bremsen betätigbar sind, einen Bremskraftverstärker, über den der Bremskreis bedienbar ist, wobei der Bremskraftverstärker über ein vom Fahrer zu betätigendes Bremspedal betätigbar ist, sowie wenigstens eine über eine Steuerungseinrichtung steuerbare Druckerzeugungs- und/oder Druckspeichereinrichtung, über die der hydraulische Druck innerhalb des Bremskreises modulierbar ist.

Kraftfahrzeuge verfügen in der Regel über den jeweiligen Rädern zugeordnete Scheibenbremsen, wobei mitunter auch Trommelbremsen verbaut sind. Die Bremsen werden über einen hydraulischen Bremskreis betätigt, der wiederum über einen Bremskraftverstärker bedient wird, um den erforderlichen Hydraulikdruck zu erzeugen. Im Vorliegenden sind unter einem Bremskraftverstärker sowohl Bremsdruckerzeugungseinrichtungen ohne als auch mit Modulationsvorrichtungen, die zur Bereitstellung von ABS- und ESC-Funktionen dienen, zu verstehen. Der Bremskraftverstärker wiederum ist bei bekannten Fahrzeugen mit dem Bremspedal gekoppelt, wobei das Bremspedal üblicherweise Teil eines Fußhebelwerks ist, an dem zumindest noch ein Fahrpedal, gegebenenfalls ein Kupplungspedal, vorgesehen ist.

Derartige bekannte Bremssysteme sind heutzutage fail-safe ausgelegt. Dies bedeutet, dass bei Eintritt eines Fehlers im Bremssystem selbst oder einer Systemkomponente wie beispielsweise entsprechenden Stellelementen, innerhalb der Kommunikationsverbindung zu Steuergeräten etc. oder der Energieversorgung, in letzter Konsequenz das Bremssystem deaktiviert wird. Unter Bremssystem ist in diesem Zusammenhang die Bremskraftverstärkung und die Bremsregelung, üblicherweise mit den Hauptfunktionen ABS (Antiblockiersystem) und ESC (Electronic Stability Control) zu verstehen. Das heißt, dass diese Funktionen nicht mehr zur Verfügung stehen, mitunter auch die Bremskraftverstärkung nicht mehr richtig arbeitet. Der Fahrer dient hierbei als Rückfallebene. Er übernimmt im Fehlerfall die Aufgabe, durch eine erhöhte Kraft, die er über das Bremspedal einbringt, das Fahrzeug zu bremsen, mithin also den benötigten Bremsdruck aufzubauen. Der Fahrer muss das Fahrzeug selbständig stabilisieren und eine angepasste Fahrweise wählen, um es im Fehlerfall zu kontrollieren und zu bremsen. Das heißt, dass der Fahrer als Rückfallebene in das Sicherheitskonzept einbezogen ist.

Moderne Kraftfahrzeuge lassen bereits jetzt ein teilautonomes Fahren zu, also ein Fahren, bei dem der Fahrer zumindest zum Teil nicht mehr in die Fahrzeugführung eingebunden ist. Die Entwicklung geht dabei immer stärker in eine den Fahrer möglichst weitgehend entlastende Richtung hin zu einem pilotierten respektive weitgehend autonomen Fahren. Das heißt, dass das Fahrzeug respektive die entsprechende Steuerung selbsttätig in der Lage ist, das Fahrzeug längs- und querzuführen, ohne dass hierfür der Fahrer eingebunden ist. Dieser kann sich anderen Dingen widmen. Mit zunehmendem Umfang des pilotierten Fahrens steigen aber auch die Anforderungen an sicherheitsrelevante Fahrzeugsysteme, die dann nicht mehr "fail-safe" ausgelegt werden müssen, sondern "fail-operational", denn sie müssen in der Lage sein, zumindest für eine gewisse Überbrückungszeit, nämlich bis der Fahrer selbst wieder aktiv in den Fahrbetrieb eingebunden ist, das Fahrzeug autonom zu führen, selbst wenn ein Störfall gegeben ist. Das heißt, dass die "fail-operational"-Regelung so ausgestaltet werden muss, als wenn der Fahrer noch in vollem Umfang aktiv eingebunden wäre. Bisher bekannte Bremssystemarchitekturen jedoch lassen die Darstellung eines solchen "fail-operational"-Verhaltens nicht zu, da sie nach wie vor auf den Fahrer als Rückfallebene abstellen. An dieser Stelle sei exemplarisch auf die WO 91/09275 A2, die DE 23 43 865 A2 und die DE 27 30 501 A2 hingewiesen.

Aus DE 10 2011 122 776 A1 ist eine Bremsanlage für ein Kraftfahrzeug bekannt, mit vier hydraulischen Radbremseinrichtungen, die jeweils einem Fahrzeugrad je Fahrzeugseite und Fahrzeugachse zugeordnet sind. Sie umfasst ferner zwei Bremskreise, die jeweils zwei der Radbremseinrichtungen mit hydraulischem Bremsdruck versorgen, sowie ein Bremspedal, dem eine Wegsensorik zum Bremswunscherkennen zugeordnet ist. Des Weiteren ist ein erster elektrohydraulischer Bremsdruckerzeuger zur Versorgung der Bremskreise mit Bremsdruck vorgesehen. Um die Ausfallsicherheit der Bremsanlage zu erhöhen, wird ein zweiter elektrohydraulischer Bremsdruckerzeuger, der dem ersten Bremsdruckerzeuger parallel geschaltet ist, vorgesehen. Es wird also durch Integration des zweiten Bremsdruckerzeugers eine einfache Redundanz erzeugt, die es ermöglicht, einen brake-bywire-Betriebsmodus auch dann beizubehalten, wenn einer der Bremsdruckerzeuger ausfällt.

Aus EP 0 937 620 A2 ist eine Vorrichtung zur Steuerung einer Bremsanlage eines Kraftfahrzeugs bekannt, bei welchem ein Bremswunsch in Sollradbremsdrücke für die einzelnen Radbremsen umgesetzt wird und der Radbremsdruck unter Berücksichtigung des gemessenen Radbremsdrucks auf den Sollradbremsdruck eingeregelt wird. Bei einem schwerwiegenden Fehler wie dem Ausfall der elektrischen Energieversorgung, der Druckversorgung oder einem elektrischen Fehler des Steuergeräts der Bremsanlage werden die die Radbremsdrücke steuernden Ventilanordnungen stromlos geschaltet, bei einem Fehler in der Bremswunscherfassung nur die der Vorderradachse zugeordneten Ventilanordnungen. Bei einem Fehler, der die Fähigkeit zum Druckaufbau oder Druckabbau an nur einem Rad betrifft, werden nur drei Radbremsen angesteuert.

Aus DE 10 2008 024 661 A1 ist schließlich eine Vorrichtung zum Erkennen eines Kreisausfalls eines Fahrzeugbremssystems bekannt. Das Bremssystem weist einen ersten und einen zweiten Bremskreis auf, sowie einen Zweikreis-Bremsgeber. Zur Ermittlung eines etwaigen Fehlers wird bei einer Betätigung des Bremskreisgebers eine erste Druckdifferenz im ersten Bremskreis und eine zweite Druckdifferenz im zweiten Bremskreis ermittelt, wonach aus der ersten und der zweiten Druckdifferenz ein Vergleichswert bestimmt wird, abhängig von dem dann entschieden wird, ob eine Fehlfunktion vorliegt oder nicht.

Der Erfindung liegt damit das Problem zugrunde, ein Kraftfahrzeug anzugeben, das bei einfach konzipierter Auslegung des Bremssystems einen "fail-operational"-Betrieb zulässt.

Zur Lösung dieses Problems ist bei einem Kraftfahrzeug der eingangs genannten Art erfindungsgemäß vorgesehen, dass in dem Bremskreis eine zweite Druckerzeugungs- und/oder Druckspeichereinrichtung vorgesehen ist, über die bedarfsabhängig der Druck innerhalb des Bremskreises unabhängig von der ersten Druckerzeugungs- und/oder Druckspeichereinrichtung im Fall einer im Bremssystem erfassten Fehlfunktion zur Einleitung eines Verzögerungsvorgangs ohne Rückgriff auf den Fahrer automatisch erhöht werden kann.

Beim erfindungsgemäßen Kraftfahrzeug ist eine zweite, separat ansteuerbare Druckerzeugungs- und/oder Druckspeichereinrichtung vorgesehen, die dazu dient, den benötigten Hydraulikdruck zum gezielten Bremsen des Fahrzeugs automatisch zu erzeugen, wenn sich ein wie auch immer gearteter Fehler innerhalb des Bremssystems ergibt, der zu einer teilweisen oder vollständigen Fehlfunktion dahingehend, dass das Bremssystem respektive seine eingebundenen Komponenten, insbesondere die, die für die ABS- und ESC-Funktionalitäten zuständig sind, die geforderte Funktion nicht mehr korrekt erfüllt. Diese zweite Druckerzeugungs- und/oder Druckspeichereinrichtung übernimmt folglich als Rückfallebene die Funktion, die bisher der Fahrer im "fail-safe"-ausgelegten Bremssystem inne hatte. Im Falle der erfindungsgemäßen "fail-operational"-Auslegung ist der Fahrer nicht mehr eingebunden. Vielmehr wird auf diese zweite Druckerzeugungs- und/oder Druckspeichereinrichtung zurückgegriffen, um bedarfsabhängig den benötigten Hydraulikdruck bei Erfassung einer Fehlfunktion zu erzeugen. Dieser Hydraulikdruck führt dazu, dass über den Bremskreis die Bremsen angesteuert werden können, um das Fahrzeug entsprechend zu verzögern. Dies erfolgt zumindest so lange, bis der Fahrer wieder aktiv eingebunden werden kann. Die Erfassung einer etwaigen Fehlfunktion innerhalb des Bremssystems erfolgt natürlich über eine entsprechende Sensorik respektive eigenständige Funktionsprüfungen der eingebundenen Komponenten, beispielsweise der ESC-Einheit, die üblicherweise eine entsprechende Ventilbaugruppe mit zugeordneter Steuerungseinrichtung aufweist, wobei die Ventilbaugruppe wiederum eine eigene Hydraulikpumpe umfasst etc. Auch Kommunikationsfehler innerhalb der bremssystemseitig eingebundenen, miteinander kommunizierenden und anzusteuernden oder ansteuernden Komponenten können erfasst werden und als Grundlage für eine Ansteuerung der zweiten Druckerzeugungs- und/oder Druckspeichereinrichtung dienen. Auch ein möglicher Stromausfall, der sich auf den Betrieb einer eingebundenen Komponente auswirkt, kann eine solche Fehlfunktion darstellen.

Da die zweite Druckerzeugungs- und/oder Druckspeichereinrichtung lediglich dazu dient, im Notfall als Rückfallebene kurzzeitig einen hinreichend hohen Brems- beziehungsweise Hydraulikdruck zu erzeugen, kann sie wesentlich einfacher ausgelegt werden als die beschriebene erste Druckerzeugungs- und/oder Druckspeichereinrichtung, bei der es sich beispielsweise um einen ESC-Block handelt, der der Modulation des Bremsdrucks innerhalb des Bremssystems dient, über den also die einzelnen Bremsdrucke an den separaten Bremsen individuell variiert werden können, um das Fahrzeug gezielt verzögern zu können. Diese erste Druckerzeugungs- und/oder Druckspeichereinrichtung weist wie ausgeführt eine entsprechende Ventilbaugruppe mit einer Vielzahl separat ansteuerbaren, entsprechend verschalteten Ventilen, eine oder mehrere zugeordnete Pumpeinrichtungen zur Erzeugung eines entsprechenden Hydraulikdrucks sowie eine separate Steuerungseinrichtung auf. Derart komplex ist die zweite Druckerzeugungs- und/oder Druckspeichereinrichtung nicht auszulegen, da sie lediglich der temporären und bedarfsabhängigen Hydraulikdruckerhöhung dient, ohne Modulationsfunktion etc. In diesem Zusammenhang sind unterschiedliche Ausgestaltungen einer solchen zweiten Druckerzeugungs- und/oder Druckspeichereinrichtung denkbar.

Nach einer ersten Erfindungsalsternative kann die zweite Druckerzeugungs- und/oder Druckspeichereinrichtung über ein schaltbares Ventil mit dem Bremskreis gekoppelt sein und bei geöffnetem Ventil unter erhöhtem Druck stehendes Hydraulikfluid in den Bremskreis fördern. Die zweite Druckerzeugungs- und/oder Druckspeichereinrichtung ist also in dem Bremskreis geschaltet und kann über ein ansteuerbares Ventil mit dem Bremskreis hydraulisch gekoppelt werden. Bei geöffnetem Ventil kann nun über die zweite Druckerzeugungs- und/oder Druckspeichereinrichtung entsprechendes Hydraulikfluid unter hohem Druck in den Bremskreis gefördert werden, worüber im Bremskreis insgesamt der Druck erhöht wird und die Bremsen entsprechend betätigt werden, um das Fahrzeug zu verzögern.

Dabei kann die zweite Druckerzeugungs- und/oder Druckspeichereinrichtung eine Hydraulikpumpe erfassen, um den benötigten Hydraulikdruck zu erzeugen. Denkbar ist es aber auch, die Druckerhöhung mittels einer Hydraulikpumpe der ersten Druckerzeugungs- und/oder Druckspeichereinrichtung vorzunehmen, das heißt, die beiden Einrichtungen miteinander zu koppeln und die zweite Druckerzeugungs- und/oder Druckspeichereinrichtung über die Hydraulikpumpe der ersten Druckerzeugungs- und/oder Druckspeichereinrichtung quasi kontinuierlich "aufzuladen". Bei Öffnung des Ventils kommt es dann quasi zu einem "Entladevorgang", der Hydraulikdruck im Bremskreis wird entsprechend erhöht. Dies setzt nur dann ein, wenn beispielsweise die erste Druckerzeugungs- und/oder Druckspeichereinrichtung eine Fehlfunktion aufweist, mithin also zur Druckerhöhung nicht mehr in der Lage ist, was beispielsweise dann der Fall sein kann, wenn die Pumpe defekt ist etc.

Eine alternative Ausgestaltung zu einer solchen Auslegung der zweiten Druckerzeugungs- und/oder Druckspeichereinrichtung sieht vor, diese als mechanische Einrichtung umfassend einen über ein schaltbares Druckerzeugungselement bewegbaren Kolben, der bei Lösen des Druckerzeugungselements auf das Hydraulikfluid wirkt, auszuführen. Dieses Druckerzeugungselement, bevorzugt ein lösbar arretiertes Federelement, dient als Kraftspeicher, der auf den bewegbaren Kolben drückt. Wird nun im Falle einer erfassten Fehlfunktion ein Zuschalten der zweiten Druckerzeugungs- und/oder Druckspeichereinrichtung angefordert, so wird das schaltbare Druckerzeugungselement entsprechend angesteuert, mithin also beispielsweise das Federelement aus seiner Arretierung gelöst, worüber der Kolben über das Federelement entsprechend kräftig beaufschlagt wird und innerhalb des Hydrauliksystems den benötigten Druck aufbaut. Der Kolben schiebt also die Bremsflüssigkeit in den Kreislauf, worüber die Bremsen angesteuert werden.

Da die Zuschaltung der zweiten Druckerzeugungs- und/oder Druckspeichereinrichtung stets im Rahmen einer Art Notfallsituation erfolgt, wenn also ein entsprechend gravierender Fehler vorliegt, ist es denkbar, das Druckerzeugungselement erst im Rahmen einer anstehenden Wartung, die ja erforderlich ist, nachdem ein gravierender Fehler vorliegt, in seine Ausgangsposition zurückzuführen. Alternativ ist es denkbar, den Kolben durch eine Erhöhung des hydraulischen Drucks durch Betrieb einer Hydraulikpumpe der ersten Druckerzeugungs- und/oder Druckspeichereinrichtung gegen die Rückstellkraft des Federelements bis zur erneuten Arretierung des Federelements zu bewegen. Das heißt, dass in dem Fall, dass beispielsweise in der ersten Druckerzeugungs- und/oder Druckspeichereinrichtung ein Fehler innerhalb des Ventilblocks gegeben ist, die Hydraulikpumpe jedoch nach wie vor noch arbeitet, durch Zuschalten dieser Hydraulikpumpe nach Einnehmen eines sicheren, in den Stillstand gebremsten Zustand der Hydraulikdruck wieder kurzzeitig erhöht wird, um den Kolben nebst Federelement wieder zurückzuschieben.

Eine weitere Alternative zur zuvor beschriebenen mechanischen Auslegung des Druckerzeugungselements in Form eines Federelements sieht vor, als Druckerzeugungselement eine pyrotechnische Zündeinrichtung zu verwenden. Diese Zündeinrichtung, die üblicherweise nur einmal gezündet werden kann, wirkt ebenfalls auf den Kolben, der durch den beim Zünden aufgebauten Druck entsprechend bewegt wird.

Eine weitere alternative Ausführungsform sieht vor, als zweite Druckerzeugungs- und/oder Druckspeichereinrichtung den Bremskraftverstärker selbst zu nutzen, der in diesem Fall als Vakuum-Bremskraftverstärker ausgeführt ist, der über ein schaltbares Ventil belüftbar ist. Bei einem Bremssystem mit Vakuum-Bremskraftverstärker kann dessen Speicherwirkung durch ein gezieltes Belüften des Bremskraftverstärkers zu einer autonomen Bremsung führen. Eine solche gezielte Belüftung kann über ein schaltbares Ventil erreicht werden.

Zweckmäßigerweise weist die zweite Druckerzeugungs- und/oder Druckspeichereinrichtung eine eigene separate Steuerungseinrichtung auf, die bevorzugt über eine entsprechende unterbrechungsfreie Stromversorgung stets aktiv ist. Insbesondere wenn die zweite Druckerzeugungs- und/oder Druckspeichereinrichtung eine eigene Hydraulikpumpe zur Druckerzeugung aufweist, kann sogar eine Regelung des Systemdrucks auch bei Ausfall der Pumpe der ersten Druckerzeugungs- und/oder Druckspeichereinrichtung, die wie beschreiben üblicherweise als ESC-Block ausgeführt ist, erfolgen. Denn in diesem Fall kann dieser ESC-Block den Hydraulikdruck nicht modulieren, wohl aber die Pumpe der zweiten Druckerzeugungs- und/oder Druckspeichereinrichtung die erste Einrichtung bedienen. Da beispielsweise im ESC-Block der Ventilblock noch entsprechend geschaltet werden kann, mithin also fehlerfrei funktioniert, kann zumindest rudimentär beispielsweise eine ABS-Funktion nachgebildet werden. Denkbar wäre sogar auch eine vollständige ESC-Funktion.

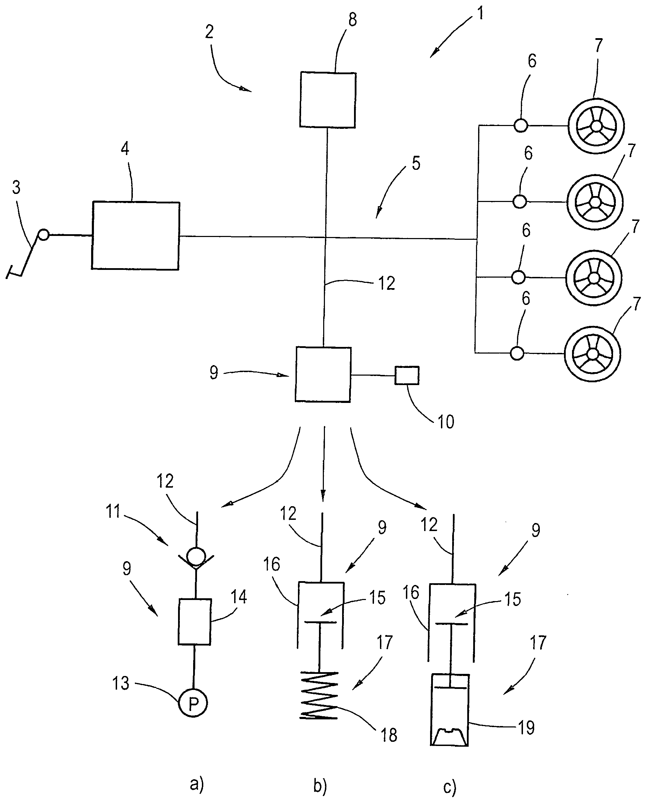

Weitere Vorteile, Merkmale und Einzelheiten der Erfindung ergeben sich aus dem im Folgenden beschriebenen Ausführungsbeispiel sowie anhand der Zeichnung.

Die Figur zeigt in Form einer Prinzipdarstellung ein erfindungsgemäßes Kraftfahrzeug 1, wobei hier lediglich das Bremssystem 2 dargestellt ist, umfassend ein Bremspedal 3, das üblicherweise vom Fahrer zu betätigen ist, einen über das Bremspedal 3 betätigbaren Bremskraftverstärker 4, über den wiederum ein Bremskreis 5 bedient wird, der wiederum auf einzelne Bremsen 6, die jeweils einem Rad 7 zugeordnet sind, wirkt. Die Figur ist eine reine Prinzipdarstellung. Selbstverständlich sind üblicherweise zwei separate Bremskreise vorgesehen, das heißt, dass das Bremssystem 2 entsprechend redundant ausgelegt ist. Die Figur ist eine reine Funktionsdarstellung, die lediglich die erfindungsgemäße Grundfunktionalität darstellen soll.

Im Bremssystem 2 integriert ist eine erste Druckerzeugungs- und/oder Druckspeichereinrichtung 8, beispielsweise ein ESC-Block, der in an sich bekannter Weise einen entsprechenden Ventilblock umfassend eine Vielzahl separat schaltbarer Ventile, wenigstens eine Hydraulikpumpe, über die der Druck der im Bremskreis 5 vorhandenen Hydraulikflüssigkeit variiert werden kann, sowie eine entsprechende Steuerungseinrichtung, über die die einzelnen Ventile wie auch die Hydraulikpumpe gesteuert werden, umfasst. Der Aufbau eines solchen ESC-Blocks ist hinreichend bekannt. Über ihn kann der Bremsdruck innerhalb des Bremssystems 2 moduliert werden, so dass an die jeweiligen Bremsen 6 ein jeweils individuelles Druckniveau angelegt werden kann, um sie separat und gezielt zu verzögern. Hierüber können unterschiedliche Assistenzfunktionen wie beispielsweise eine ABS-Funktion oder eine Schlupfregelung etc. realisiert werden.

Erfindungsgemäß ist nun in das Bremssystem 2 eine zweite Druckerzeugungs- und/oder Druckspeichereinrichtung 9 integriert, die dazu dient, bedarfsabhängig den Bremsdruck innerhalb des Bremssystems 2 bzw. des Bremskreises 4 zu erhöhen, sollte sich eine Fehlfunktion innerhalb des Bremssystems einstellen. Eine solche Fehlfunktion kann beispielsweise darin gegeben sein, dass innerhalb des ESC-Blocks 8, beispielsweise im Ventilblock, eine Fehlfunktion vorliegt, mithin also ein oder mehrere Ventile nicht mehr geschaltet werden können, dass es zu einem Stromausfall kommt und der ESC-Block 8 nicht mehr angesteuert werden kann etc. Um in diesem Fall einen "fail-operational"-Betrieb zu gewährleisten, und ohne Rückgriff auf den Fahrer das Fahrzeug zu verzögern und dem Fahrer eine hinreichende Übergangszeit zu verschaffen, innerhalb welcher er die Kontrolle wieder übernehmen kann, kann über diese zweite Druckerzeugungs- und/oder Druckspeichereinrichtung 9 temporär der Hydraulikdruck innerhalb des Bremssystems 2 erhöht werden, mithin also die Bremsen 6 betätigt werden, um das Fahrzeug gezielt zu verzögern, also einen automatischen Verzögerungsvorgang hierüber einzuleiten. Im gezeigten Beispiel ist der zweiten Druckerzeugungs- und/oder Druckspeichereinrichtung 9 eine separate Steuerungseinrichtung 10 zugeordnet bzw. umfasst die Einrichtung 9 eine solche, alternativ könnte auch eine Steuerung über die Steuerungseinrichtung des ESC-Blocks, also der ersten Druckerzeugungs- und/oder Druckspeichereinrichtung 8 erfolgen, solange sichergestellt ist, dass diese stets unterbrechungsfrei an einer Stromversorgung hängt und stets aktiv ist.

Wird ein wie auch immer gearteter Fehler innerhalb des Bremssystems 2 sensiert, der dazu führt, dass dieses in Teilen oder komplett nicht mehr ordnungsgemäß arbeitet und folglich der Fahrer aufzufordern ist, die Kontrolle über das Fahrzeug zu übernehmen, wird eine entsprechende Information an die Steuerungseinrichtung 10 gegeben, die daraufhin die entsprechende Druckerhöhung ansteuert. Es kommt sodann zu einem automatischen Aufbau eines hinreichend hohen Bremsdrucks um das Fahrzeug zu verzögern. Ein Tätigwerden des Fahrers, wie bei lediglich "fail-safe" ausgelegten Systemen, wo der Fahrer aktiv beispielsweise trotz Fehlfunktion innerhalb des Bremskraftverstärkers 4 das Fahrpedal betätigen muss, ist erfindungsgemäß nicht von Nöten.

Um den erhöhten Bremsdruck aufbauen zu können sind unterschiedliche Auslegungen der zweiten Druckerzeugungs- und/oder Druckspeichereinrichtung 9 denkbar. Diese sind in der Figur über die hier lediglich exemplarisch gezeigten und mit a), b) und c) gezeigten Alternativen dargestellt.

Gemäß der Ausführungsausgestaltung a) ist die zweite Druckerzeugungs- und/oder Druckspeichereinrichtung 9 über ein schaltbares Ventil 11 in eine entsprechende Leitung 12, die Teil des Bremssystems ist, eingebunden. Sie umfasst eine separat ansteuerbare Pumpe 13, über die die in einem Reservoir 14 befindliche Bremsflüssigkeit unter hohem Druck gepumpt wird. Wird das Ventil 11 zum Öffnen angesteuert, so wird automatisch auch die Pumpe 13 angesteuert, so dass Hydraulikflüssigkeit unter hohem Druck in das Bremssystem 2 gepumpt wird und die Bremsen 6 entsprechend betätigt werden. Die entsprechende Ansteuerung der steuerbaren Komponenten erfolgt selbstverständlich über die Steuerungseinrichtung 10.

Wenngleich gemäß Ausgestaltung a) die Pumpe 13 Teil der zweiten Druckerzeugungs- und/oder Druckspeichereinrichtung 9 ist, ist es denkbar, anstelle der Pumpe 13 eine entsprechende Pumpe, die Teil der ersten Druckerzeugungs- und/oder Druckspeichereinrichtung 8 ist, zu verwenden. Das heißt, dass beispielsweise im Normalbetrieb dieser ersten Druckerzeugungs- und/oder Druckspeichereinrichtung 8, wenn also die dortige Pumpe fehlerfrei arbeitet, die im Reservoir 14 befindliche Hydraulikflüssigkeit stets unter hohem Druck gespeichert ist. Kommt es zu einem erfassten Fehlerfall, so ist lediglich über die Steuerungseinrichtung 10 das Ventil 11 anzusteuern, so dass das Reservoir 14, also der Speicher, entladen wird.

Bei der Erfindungsausgestaltung gemäß Variante b) umfasst die zweite Druckerzeugungs- und/oder Druckspeichereinrichtung 9 einen beweglichen Kolben 15 in einem Zylinder 16, wobei Kolben 15 über ein schaltbares Druckerzeugungselement 17 beaufschlagt werden kann. Über den Kolben 15 wird Hydraulikflüssigkeit, die in dem Zylinder 16 aufgenommen ist, über die Leitung 12 unter hohem Druck in das Bremssystem 2 eingebracht.

Bei der Ausgestaltung gemäß b) ist das schaltbare Druckerzeugungselement 17 ein Federelement 18, das in einer Arretierstellung, in der es komprimiert ist, fixiert ist. Wird die schaltbare Arretierung, die über die Steuerungseinrichtung 10 ansteuerbar ist, entsprechend gelöst, entspannt sich das Federelement 18 und betätigt den Kolben 15, der sodann die Hydraulikflüssigkeit unter hohem Druck aus dem Zylinder 16 schiebt.

Die Ausführungsvariante c) ist eine Alternative zur Variante b). Wiederum umfasst die zweite Druckerzeugungs- und/oder Druckspeichereinrichtung 9 einen Kolben 15, der in einem Zylinder 16 beweglich ist. Das schaltbare Druckerzeugungselement 17 ist hier als pyrotechnische Zündeinrichtung 19 ausgeführt. Wird diese gezündet, so kommt es schlagartig zu einer entsprechenden Druckerhöhung, welche sich wiederum auf den Kolben 15 auswirkt, der im Zylinder 16 bewegt wird und unter hohem Druck die Bremsflüssigkeit in das Bremssystem 2 schiebt.

Die gezeigten Ausführungsbeispiele gemäß a), b) und c) sind lediglich exemplarischer Natur. Selbstverständlich können auch andere Ausführungsformen gewählt werden, solange sie eine im Bedarfsfall mögliche Druckerhöhung realisieren.

Während die Ausführungsvarianten b) und c), da letztlich nur einmalig betätigbar, eine kurzzeitige und letztlich nicht variable Druckerhöhung zulassen, lässt die Ausführungsvariante a) je nach gegebenem Fehler sogar eine zumindest rudimentäre Nachbildung der im regulären Betrieb gegebenen ABS- oder ESC-Funktionalitäten zu. Ist beispielsweise seitens des ESC-Blocks 8 die Pumpe defekt, der Ventilblock jedoch noch voll funktionsfähig, so könnte über die zweite Druckerzeugungs- und/oder Druckspeichereinrichtung 9 gemäß Ausführungsvariante a) mit ihrer separaten Pumpe 13 die Hydraulikflüssigkeit unter entsprechendem Druck zugeführt werden, die dann über den Ventilblock des ESC-Blocks 8 entsprechend verteilt respektive moduliert wird. Zumindest für eine Übergangszeit, bis entweder der Fahrer wieder die volle Kontrolle übernommen hat, oder bis das Fahrzeug definiert in einen Stillstand gebremst ist, könnten die Funktionalitäten zur Verfügung gestellt werden. Mit dem Bremsen in den Stillstand wird gegebenenfalls auch ein etwaiges vorhandenes Getriebe automatisch in die Neutralstufe geschaltet.

## Patentansprüche

1. Kraftfahrzeug umfassend mehrere Räder sowie ein Bremssystem mit jeweils einem Rad zugeordneten, hydraulisch betätigbaren Bremsen, wenigstens einen Bremskreis, über den die Bremsen betätigbar sind, einen Bremskraftverstärker, über den der Bremskreis bedienbar ist, wobei der Bremskraftverstärker über ein vom Fahrer zu betätigendes Bremspedal betätigbar ist, sowie wenigstens eine über eine Steuerungseinrichtung steuerbare Druckerzeugungs- und/oder Druckspeichereinrichtung, über die der hydraulische Druck innerhalb des Bremskreises modulierbar ist,
**dadurch gekennzeichnet,**
**dass** in dem Bremskreis (5) eine zweite Druckerzeugungs- und/oder Druckspeichereinrichtung (9) vorgesehen ist, über die bedarfsabhängig der Druck innerhalb des Bremskreises (5) unabhängig von der ersten Druckerzeugungs- und/oder Druckspeichereinrichtung (8) im Fall einer im Bremssystem (2) erfassten Fehlfunktion zur Einleitung eines Verzögerungsvorgangs ohne Rückgriff auf den Fahrer automatisch erhöht werden kann.

2. Kraftfahrzeug nach Anspruch 1,
**dadurch gekennzeichnet,**
**dass** die zweite Druckerzeugungs- und/oder Druckspeichereinrichtung (9) über ein schaltbares Ventil (11) mit dem Bremskreis (5) gekoppelt ist und bei geöffnetem Ventil (11) unter erhöhtem Druck stehendes Hydraulikfluid in den Bremskreis (5) fördert.

3. Kraftfahrzeug nach Anspruch 2,
**dadurch gekennzeichnet,**
**dass** die zweite Druckerzeugungs- und/oder Druckspeichereinrichtung (9) eine Hydraulikpumpe (13) umfasst, oder mit einer Hydraulikpumpe der ersten Druckerzeugungs- und/oder Druckspeichereinrichtung (8) verbunden ist.

4. Kraftfahrzeug nach Anspruch 1,
**dadurch gekennzeichnet,**
**dass** die zweite Druckerzeugungs- und/oder Druckspeichereinrichtung (9) eine mechanische Einrichtung umfassend einen über ein schaltbares Druckerzeugungselement (17) bewegbaren Kolben (15), der bei Lösen des Druckerzeugungselements (17) auf das Hydraulikfluid wirkt.

5. Kraftfahrzeug nach Anspruch 4,
**dadurch gekennzeichnet,**
**dass** das Druckerzeugungselement (17) ein lösbar arretiertes Federelement (18) ist.

6. Kraftfahrzeug nach Anspruch 5,
**dadurch gekennzeichnet,**
**dass** der Kolben (16) durch eine Erhöhung des hydraulischen Drucks durch Betrieb einer Hydraulikpumpe der ersten Druckerzeugungs- und/oder Druckspeichereinrichtung (8) gegen die Rückstellkraft des Federelements (18) bis zur erneuten Arretierung des Federelements (18) bewegbar ist.

7. Kraftfahrzeug nach Anspruch 4,
**dadurch gekennzeichnet,**
**dass** das Druckerzeugungselement (17) eine pyrotechnische Zündeinrichtung (19) ist.

8. Kraftfahrzeug nach Anspruch 1,
**dadurch gekennzeichnet,**
**dass** die zweite Druckerzeugungs- und/oder Druckspeichereinrichtung der Bremskraftverstärker (4), der als Vakuum-Bremskraftverstärker ausgeführt ist, ist, der über ein schaltbares Ventil belüftbar ist.

9. Kraftfahrzeug nach einem der vorangehenden Ansprüche,
**dadurch gekennzeichnet,**
**dass** eine separate Steuerungseinrichtung (10) zur Ansteuerung der zweiten Druckerzeugungs- und/oder Druckspeichereinrichtung (9) vorgesehen ist.

## Claims

1. Motor vehicle, comprising: a plurality of wheels; a brake system, which has brakes, which can be hydraulically actuated and which are each associated with a wheel; at least one brake circuit, by means of which the brakes can be actuated; a brake booster, by means of which the brake circuit can be operated, wherein the brake booster can be actuated by means of a brake pedal to be pressed by the driver; and at least one pressure-generating and/or pressure-accumulating device, which can be controlled by means of a control device and by means of which the hydraulic pressure within the brake circuit can be modulated, **characterised in that** a second pressure-generating and/or pressure-accumulating device (9) is provided in the brake circuit (5), by means of which second pressure-generating and/or pressure-accumulating device the pressure within the brake circuit (5) can be automatically increased in dependence on demand independently of the first pressure-generating and/or pressure-accumulating device (8) in the case of a malfunction detected in the brake system (2), to initiate a deceleration process without recourse to the driver.

2. Motor vehicle according to claim 1, **characterised in that** the second pressure-generating and/or pressure-accumulating device (9) is coupled with the brake circuit (5) by way of a switchable valve (11) and, when the valve (11) is open, conveys hydraulic fluid that is under high pressure into the brake circuit (5).

3. Motor vehicle according to claim 2, **characterised in that** the second pressure-generating and/or pressure-accumulating device (9) comprises a hydraulic pump (13), or is connected with a hydraulic pump of the first pressure-generating and/or pressure-accumulating device (8).

4. Motor vehicle according to claim 1, **characterised in that** the second pressure-generating and/or pressure-accumulating device (9) is a mechanical device comprising a piston (15) that can be moved by way of a switchable pressure-generating element (17), said piston acting on the hydraulic fluid when the pressure-generating element (17) is released.

5. Motor vehicle according to claim 4, **characterised in that** the pressure-generating element (17) is a releasably locked spring element (18).

6. Motor vehicle according to claim 5, **characterised in that** the piston (16) can be moved by an increase in the hydraulic pressure by operation of a hydraulic pump of the first pressure-generating and/or pressure-accumulating device (8) against the return force of the spring element (18), until the spring element (18) is locked again.

7. Motor vehicle according to claim 4, **characterised in that** the pressure-generating element (17) is a pyrotechnic ignition device (19).

8. Motor vehicle according to claim 1, **characterised in that** the second pressure-generating and/or pressure-accumulating device is the brake booster (4), which is embodied as vacuum brake booster, which can be ventilated by way of a switchable valve.

9. Motor vehicle according to any one of the preceding claims, **characterised in that** a separate control device (10) is provided to control the second pressure-generating and/or pressure-accumulating device (9).

## Revendications

1. Véhicule automobile comprenant plusieurs roues ainsi qu'un système de freinage avec respectivement des freins associés à une roue, pouvant être actionnés de manière hydraulique, au moins un circuit de freinage, par l'intermédiaire duquel les freins peuvent être actionnés, un amplificateur de force de freinage, par l'intermédiaire duquel le circuit de freinage peut être utilisé, dans lequel l'amplificateur de force de freinage peut être actionné par l'intermédiaire d'une pédale de frein, ainsi qu'au moins un dispositif de génération de pression et/ou d'accumulation de pression pouvant être commandé par l'intermédiaire d'un dispositif de commande, par l'intermédiaire duquel la pression hydraulique peut être modulée à l'intérieur du circuit de freinage.
**caractérisé en ce**
**qu'**est prévu, dans le circuit de freinage (5), un deuxième dispositif de génération de pression et/ou d'accumulation de pression (9), par l'intermédiaire duquel, selon les besoins, la pression peut être augmentée de manière automatique à l'intérieur du circuit de freinage (5) indépendamment du premier dispositif de génération de pression et/ou d'accumulation de pression (8) dans le cas d'un dysfonctionnement détecté dans le système de freinage (2) servant à commencer une opération de décélération sans intervention du conducteur.

2. Véhicule automobile selon la revendication 1,
**caractérisé en ce**
**que** le deuxième dispositif de génération de pression et/ou d'accumulation de pression (9) est couplé par l'intermédiaire d'une soupape (11) pouvant être commutée au circuit de freinage (5) et refoule dans le circuit de freinage (5) un fluide hydraulique sous une pression plus élevée lorsque la soupape (11) est ouverte.

3. Véhicule automobile selon la revendication 2,
**caractérisé en ce**
**que** le deuxième dispositif de génération de pression et/ou d'accumulation de pression (9) comprend une pompe hydraulique (13) ou est relié à une pompe hydraulique du premier dispositif de génération de pression et/ou d'accumulation de pression (8).

4. Véhicule automobile selon la revendication 1,
**caractérisé en ce**
**que** le deuxième dispositif de génération de pression et/ou d'accumulation de pression (9) présente un dispositif mécanique comprenant un piston (15) pouvant être déplacé par l'intermédiaire d'un élément de génération de pression (17) pouvant être commuté, qui agit sur le fluide hydraulique lors du déclenchement de l'élément de génération de pression (17).

5. Véhicule automobile selon la revendication 4,
**caractérisé en ce**
**que** l'élément de génération de pression (17) est un élément de ressort (18) pouvant être arrêté de manière amovible.

6. Véhicule automobile selon la revendication 5,
**caractérisé en ce**
**que** le piston (16) peut être déplacé du fait d'une élévation de la pression hydraulique par le fonctionnement d'une pompe hydraulique du premier dispositif de génération de pression et/ou d'accumulation de pression (8) à l'encontre de la force de rappel de l'élément de ressort (18) jusqu'au nouvel arrêt de l'élément de ressort (18).

7. Véhicule automobile selon la revendication 4,
**caractérisé en ce**
**que** l'élément de génération de pression (17) est un dispositif d'allumage (19) pyrotechnique.

8. Véhicule automobile selon la revendication 1,
**caractérisé en ce**
**que** le deuxième dispositif de génération de pression et/ou d'accumulation de pression est l'amplificateur de force de freinage (4), qui est réalisé sous la forme d'un amplificateur de force de freinage sous vide, qui peut être aéré par l'intermédiaire d'une soupape pouvant être commutée.

9. Véhicule automobile selon l'une quelconque des revendications précédentes,
**caractérisé en ce**
**qu'**un dispositif de commande (10) séparé est prévu pour piloter le deuxième dispositif de génération de pression et/ou d'accumulation de pression (9).
